# EUROPEAN PATENT APPLICATION

(11) **EP 3 106 964 A1**
(43) Date of publication of application: **21.12.2016**
(21) Application number: 15183391.0
(22) Date of filing: 01.09.2015
(51) Int. Cl.: G06F 3/01, G09B 5/00

(54) **DEVICE FOR ASSISTING A USER TO REMEMBER A NUMERICAL STRING**

(30) Priority: 16.06.2015 US 201562180399 P
(71) Applicant: Alrasheed, Abdullah Khalid, 11481 Riyadh (SA)
(72) Inventor: Alrasheed, Abdullah Khalid, 11481 Riyadh (SA)
(74) Representative: Derry, Paul Stefan

(57) **Abstract**

A device for assisting a user to remember a numerical string, the device comprising a processor; a memory for storing a lookup table; an input module for providing one or more decimal digits to the processor; and an output for receiving an output from the processor; wherein the processor is configured to accumulate decimal digits until a predetermined number of decimal digits is accumulated, wherein the predetermined number is at least three; to respond to detecting that the predetermined number of decimal digits has been accumulated by performing a lookup to retrieve a human language word associated with the accumulated decimal digits, wherein performing the lookup comprises generating a query based on the accumulated decimal digits and submitting the generated query to the lookup table; and to provide the retrieved word to the output.

## Description

Embodiments of the present invention relate to devices for assisting users to remember numerical strings.

Human memory has a limited ability to store and recall information in the short term memory, or "working" memory. Theorists have postulated that the average human can hold 7 +/- 2 objects in their working memory. This information is either transferred to their long term memory or it is lost.

In daily life, humans often need to memorize and recall many pieces of information including ATM PIN numbers, social security numbers, driver's license or other such state-issued identifiers, vehicle license plate identifiers, telephone numbers, lock combinations, computer and phone passwords, and the like. Based on human's limited working memory capacity, it is generally impossible to keep all this information in the working memory. Thus, this information is lost unless the information is transferred into the long term memory.

Even more problematic, these bits of information often involve numbers. Humans have a particularly harder time remembering and transferring digits into their long term memory.

To overcome these disadvantages, the present invention provides a device for assisting a user to remember a numerical string.

According to an embodiment, a device is provided which includes a processor, a memory for storing a lookup table, an input module for providing one or more decimal digits to the processor and an output for receiving an output from the processor. The processor accumulates decimal digits until a predetermined number of decimal digits has been accumulated, wherein the predetermined number is at least three. The processor also responds to detecting that the predetermined number of decimal digits has been accumulated by performing a lookup to retrieve a human language word associated with the accumulated decimal digits, wherein performing the lookup comprises generating a query based on the accumulated decimal digits and submitting the generated query to the lookup table. The processor also provides the retrieved word to the output.

The input module may include a user input to receive one or more digits from a user, and the input module may provide the one or more digits to the processor as they are input.

The user input may further to receive a confirmation input to indicate that the user input is complete, and the input module may accumulate the one or more digits and, on receiving the confirmation input, provide the accumulated digits to the processor.

The received digits may be provided to the processor in the same order in which they were input.

The received digits may be provided to the processor in the reverse order from which they were input

The input module may perform an operation to determine whether the number of digits input by the user is a multiple of three, separate the input digits into groups of three and a remainder provide the groups of three digits to the processor and provide the remained to the output.

The input module may include a camera for scanning one or more digits and a text recognition module for recognising the one or more input digits.

The lookup table may include one thousand entries, each entry comprising a distinct sequence of decimal digits and a human language word associated with said sequence of digits.

The output may include a display for displaying the retrieved word to a user, and the output display may display a pictorial representation of the retrieved word instead of, or in addition to, the retrieved word.

According to a further embodiment, a device is provided which includes a processor, a memory for storing a lookup table, an input module for providing one or more human language words to the processor, and an output for receiving an output from the processor. The processor performs a lookup to retrieve a number of decimal digits associated with each of the one or more words, wherein the number of decimal digits associated with each of the one or more words is at least three, and performing the lookup includes generating a query based on the one or more words and submitting the generated query to the lookup table. The processor also provides the retrieved decimal digits to the output.

The input module may include a user input configured to receive the one or more words from a user.

The user input may also receive a confirmation input to indicate that the user input is complete.

The input module may include a camera for scanning one or more words or a pictorial representation of one or more words, and an image recognition module for recognising the one or more scanned words or determining the one or more words represented by the one or more pictorial representations scanned by the camera.

The lookup table may include one thousand entries, each entry including a distinct sequence of decimal digits and a human language word associated with said sequence of digits.

The output may include a display for displaying the retrieved decimal digits to a user.

In addition to the features mentioned above, other aspects of the present invention will be readily apparent from the following descriptions of the drawings and exemplary embodiments; wherein like reference numerals across the several views refer to identical or equivalent features, and wherein:
Figure 1 is a schematic diagram of a device according to an embodiment;
Figure 2 is a representative flow diagram illustrating an operation of the device of Figure 1;
Figure 3 is a representative flow diagram illustrating an operation of the device of Figure 1;
Figure 4 is an exemplary interface for the device of Figure 1;
Figure 5 is a schematic representation of a system according to an embodiment;
Figure 6 is an exemplary 1,000 word table for use in accordance with the invention; and
Figure 7 is a table of exemplary set of subsets of 1,000 words and the resulting number of distinct permutations resulting therefrom.

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity. The terminology used herein is for the purpose of describing particular embodiments only and is not intended to be limiting of the invention.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/ or components, but do not preclude the presence or addition of one or more other features, integers, steps, operations, elements, components, and/or groups thereof.

Embodiments of the invention are described herein with reference to illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

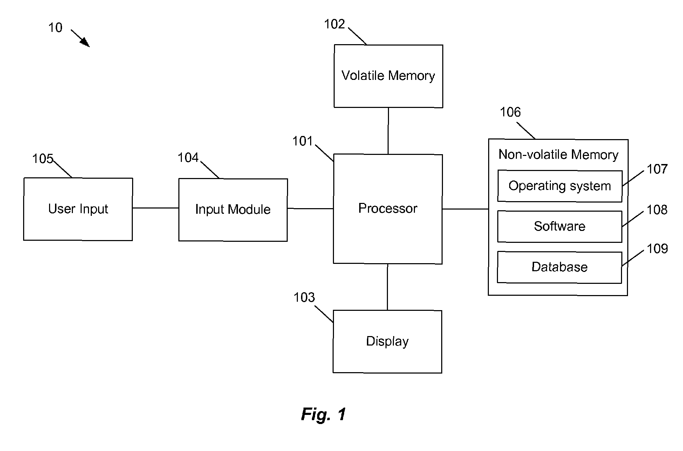

With reference to Figure 1, a block diagram illustrating internal components of a device 10 is shown. The device includes a processor 101. The processor 101 controls operation of the other hardware components of the device 10. The processor 101 and other hardware components may be connected via a system bus (not shown). Each hardware component may be connected to the system bus either directly or via an interface. The device comprises working or volatile memory, such as Random Access Memory (RAM), 102 and a non-volatile memory 106, such as read only memory (ROM) or Flash memory.

The device 10 may be a personal computer, a server, or a portable device of any kind. Other standard or optional components of the device 10, such as network connections, wireless modules and cameras, are omitted from the Figure. The processor 101 may be an integrated circuit of any kind. The processor 101 may access volatile memory 102 in order to process data and may control the storage of data in memory 106. Memory 106 may be a non-volatile memory of any kind such as a Read Only Memory (ROM), a Flash memory or a magnetic drive memory. Other non-volatile memories may be included, but are omitted from the Figure. The volatile memory 104 may be a RAM of any type, for example Static RAM (SRAM), Dynamic RAM (DRAM), or it may be Flash memory. Multiple volatile memories 104 may be included, but are omitted from the Figure.

The processor 101 may for instance be a general purpose processor. It may be a single core device or a multiple core device. The processor 101 may be a central processing unit (CPU) or a general processing unit (GPU). Alternatively, it may be a more specialist unit, for instance a RISC processor or programmable hardware with embedded firmware. Multiple processors 102 may be included. The processor 101 may be termed processing means.

The non-volatile memory 106 stores an operating system 107 and various software applications 108. The non-volatile memory 106 also stores data files and associated metadata, including a database 109. The processor 101 operates under control of the operating system 107. The operating system 107 may comprise code (i.e. drivers) relating to hardware such as the display 103 and user input 105, as well as code relating to the basic operation of the device 10. The operating system 107 may also cause activation of other software 108 stored in the memory 106. Generally speaking, the processor 101 executes one or more applications using the operating system 107, both of which are stored permanently or semi-permanently in the non-volatile memory 106, using the volatile memory 102 temporarily to store applications forming a whole or part of the operating system 107 and the software 108 and also temporarily to store data generated during execution of the software 108.

The device comprises a display 103, a user input 105 and an input module 104. The device may comprise one or more examples of user input hardware 105, such as a keyboard and/or mouse, a number pad or a motion controller. The display 103 may also be a touch sensitive display having a tactile interface for the user input 105.

The processor 101 is configured to send and receive signals to and from the other components in order to control operation of the other components. For example, the processor 101 controls the output of content to the display 103, and receives signals as a result of user inputs from the user input 105 via the input module 104. The display 103 may be a direct view liquid crystal display (LCD) or direct view organic light emitting diode (OLED) display.

The user input 105 may refer to hardware keys such as a QWERTY keyboard, numeric keypad, etc. The user input 105 may include accessory input hardware such as an input pen, or a scanner such as a camera. The user input 105 may include a touch sensitive display which also receives user inputs, including a resistive touch screen or capacitive touch screen of any kind.

The user input 105 is configured to receive an alphanumeric input from a user and may comprise, for example, a keyboard and/or a number pad, a scanning device with optical character recognition software or a microphone and voice translation device. The user input 105 of the device 10 is provided with the display 103 in a touchscreen input/output module which is configured to display a keyboard and/or number pad user interface to receive the alphanumeric input from the user.

The input module 104 monitors the user input 105 for the alphanumeric input and provides the input to the processor 101 according to an exemplary operation of the device 10. The processor 101 performs a processing operation on the alphanumeric input according to an exemplary operation of the device 10. In particular, the processor 101 performs a lookup operation wherein the database 109 stored in the memory 106 is queried with at least a part of the alphanumeric input and a lookup response is provided to the processor 101 by the database 109. The processor 101 may perform one or more lookup operations based on one or more parts of the alphanumeric input.

The display 103 receives a result of the processing operation from the processor 101 and is configured to display the output to the user. The output comprises at least one alphanumeric character or, alternately, may comprise one or more pictorial elements. In some embodiments, the result of the processing operation is provided to the user as an audio output.

The device 10 is configured to receive an alphanumeric input which is difficult for a user to remember and to process the input to provide an output which can be remembered by the user. The device 10 is further configured to receive an input which is remembered by the user, and to process the input to provide an alphanumeric output. The invention thereby provides for the recollection of an alphanumeric string which would otherwise be difficult for a user to remember.

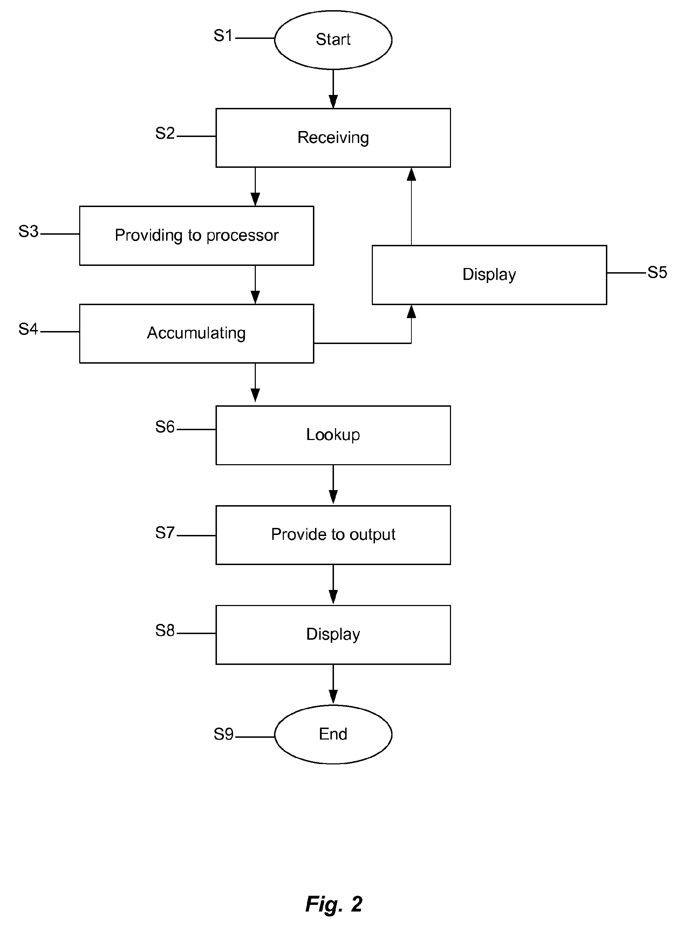

With reference to Figure 2, a representative flow diagram is shown which illustrates an exemplary operation for remembering a number using the device 10. In the following, actions said to be made by the device typically are made by the processor 101 operating according to instructions provided by the software 108 and/or the operating system 107.

The operation begins at S1.

At S2, the input module 104 receives one or more digits input by the user through the user input 105. The user input 105 comprises a touch sensor of a touchscreen which is configured to display a number pad, and by touching one or more displayed numbers in sequence the user can input a string of digits to the input module 104. The input string of digits may be a string of decimal digits, for example, a phone number, a social security number, a bank number, a passport number, a license plate number, or the like.

At S3, the one or more digits are provided to the processor 101 by the input module 104. According to the embodiment, the digits are provided to the processor 101 in the order that they are received by the input module 104. In an alternative embodiment, the input module 104 may be configured to accumulate a plurality of digits until a confirmation command is input through the user input 105, and to provide the plurality of digits to the processor 101 in a pre-determined order.

At S4, the processor 101 accumulates the one or more digits provided by the input module 104 until a predetermined number of digits has been received. For example, the processor 101 accumulates digits until three digits have been received from the input module 104. The accumulated digits are stored by the processor 101 in the volatile memory 102. If fewer than three digits have been accumulated, the operation proceeds to S5 before returning to S2 to await a further input from the user. Alternative, if a plurality of digits have been accumulated by the input module 104, the operation may return to S3 to provide one or more of the accumulated digits to the processor 101. At S5, the accumulated digits are provided to the display 103 by the processor 101 and displayed on the display 103 of the touchscreen. If three digits have been accumulated by the processor 101, the operation proceeds to S6.

At S6, the processor 101 performs a lookup operation wherein the three accumulated digits are used to query the database 109 which is stored in the memory 106. The processor 101 generates a query comprising the three decimal digits, and submits the generated query to the database 109. The database 109 comprises at least one lookup table, wherein each entry in the table links a particular sequence of digits with a word. The sequence of digits in each entry comprises the same number of digits as the predetermined number of digits accumulated by the processor 101, that is, each entry links a particular permutation of three digits with a word.

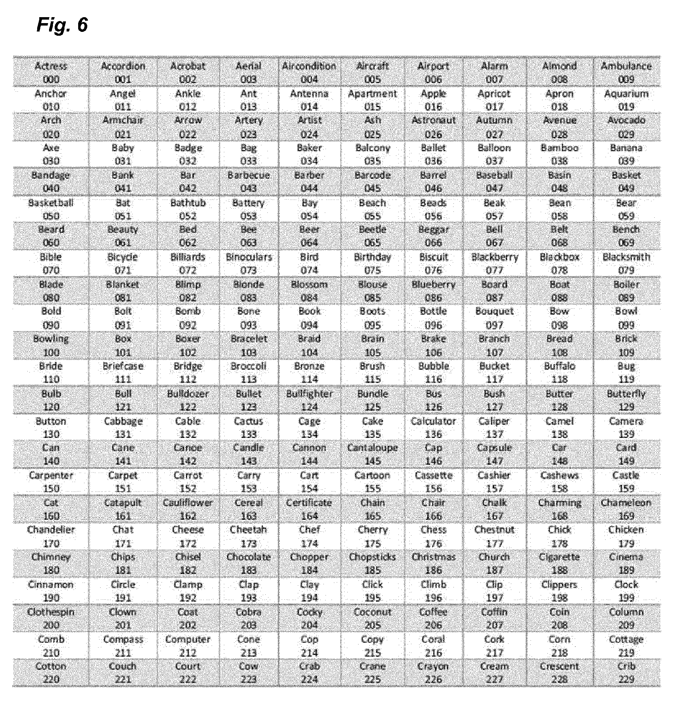

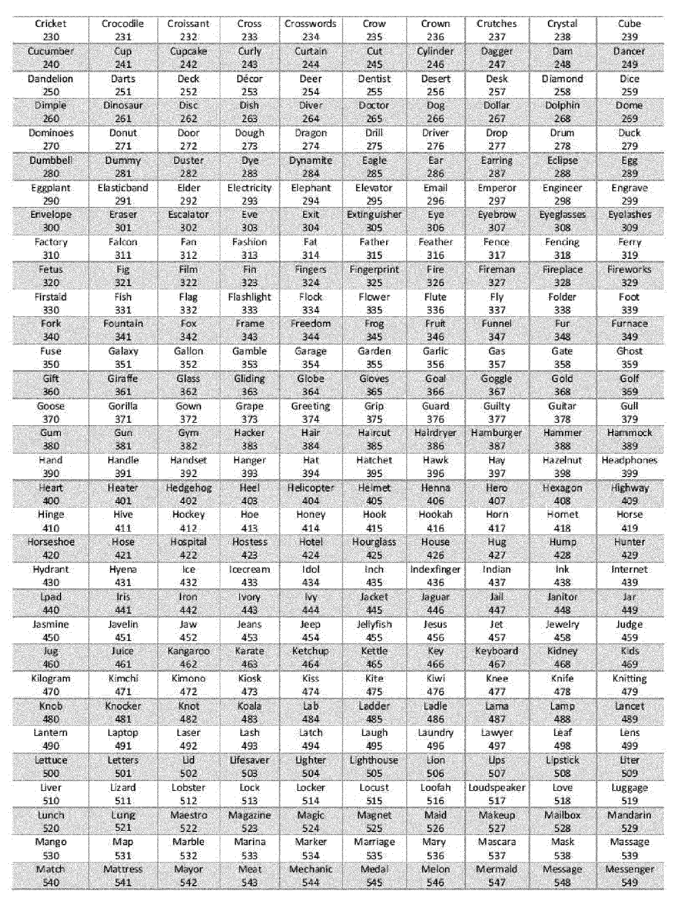

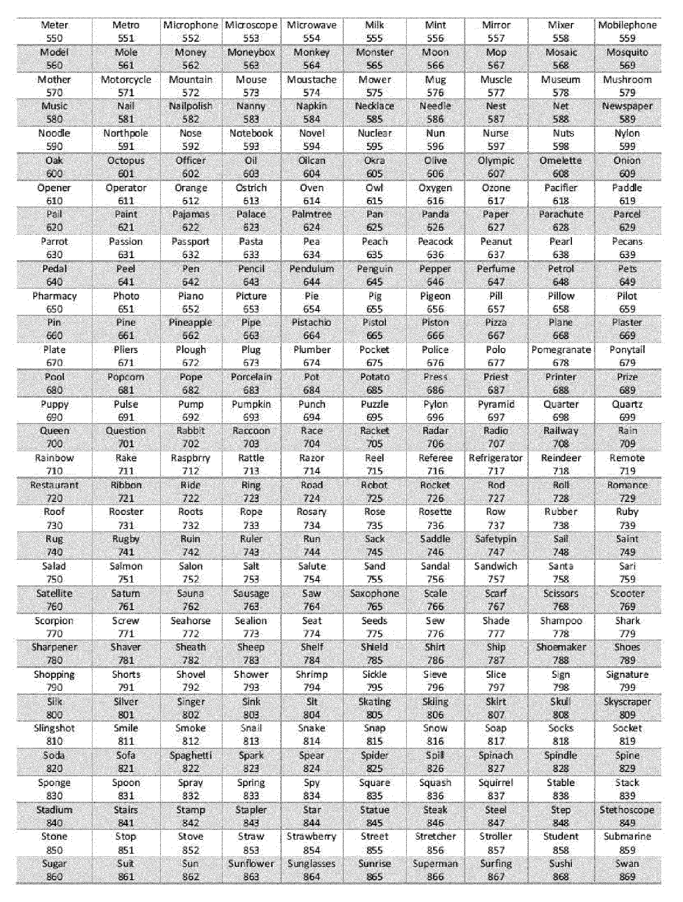

With reference to Figure 6, an exemplary lookup table is provided with one thousand entries. The exemplary table includes a thousand permutations of three digits, from "000" to "999" in a numerical sequence. The table additionally includes one thousand words, wherein each entry also includes a word which is linked to the corresponding sequence of digits.

The exemplary table includes a thousand human language words representing objects, which may be represented pictorially. The words may additionally be selected for familiarity e.g. common use, simplicity, and distinctiveness from one another. Words which may cause offense may be omitted from the list of words.

In response to the lookup query comprising a particular sequence of three digits, a corresponding word from the same entry in the table is returned to the processor 101 by the memory 106.

At S7, the word returned by the operation of the processor 101 is provided to an output display 103 of the device, that is, to the touchscreen. At S8, the word is displayed to the user by the display 103. The accumulated digits displayed at S5 are replaced by the word provided by the process. The display 103 is therefore configured to display a first digit followed by a second digit, and upon receiving input of a third digit is configured to replace the first and second digits with a word representing the three digits in sequence.

In some embodiments, the display 103 is configured to display a picture of an object instead of, or in addition to the word which describes the object. In some embodiments, the output of the device 10 may include an audio output module e.g. a speaker, to provide an audio output instead of, of in addition to, the visual output on the touchscreen.

The operation may return to S2 in order to receive a further input from the user or, alternatively, to S3 in order to process further digits accumulated in the input module 104. By repeatedly looping through the operation in this manner, a plurality of words and/or pictures can be displayed to represent a longer sequence of digits.

The operation ends at S9.

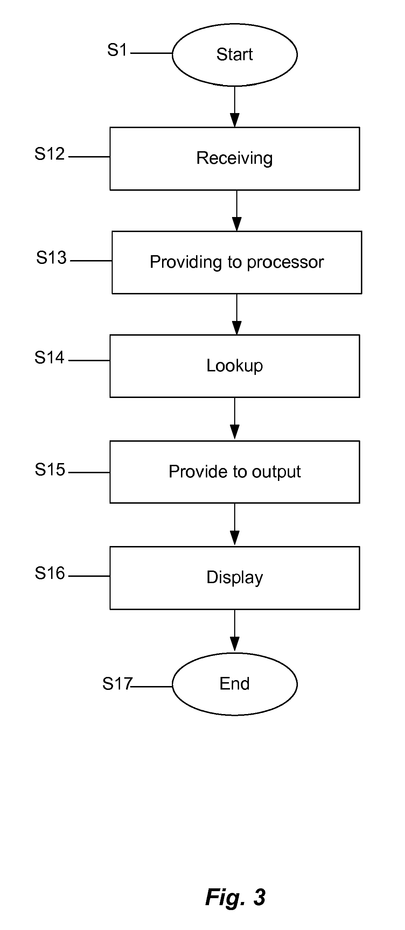

With reference to Figure 3, a representative flow diagram is shown which illustrates an exemplary operation for the recollection of a number using the device 10. In the following, actions said to be made by the device typically are made by the processor 101 operating according to instructions provided by the software 108 and/or the operating system 107.

The operation begins at S11.

At S12, the input module 104 receives one or more words and/or digits input by the user through the user input 105. The user input 105 comprises a touch sensor of a touchscreen which is configured to display a keyboard and/or number pad, and by touching one or more displayed letters in sequence the user can input a word to the input module 104.

At S13, one of the one or more words is provided to the processor 101 by the input module 104. Alternatively, a plurality of words may be provided to the processor 101 at one time.

At S14, the processor 101 performs a lookup operation wherein the one or more words are used to query the database 109 which is stored in the memory 106. The processor 101 generates a query comprising the one or more words and submits the generated query to the database 109. The database 109 comprises at least one lookup table, for example that shown in Figure 6, wherein each entry in the table links a word with a particular sequence of decimal digits. The exemplary table is providing with one thousand entries, each of which links a word with a particular permutation of three digits, from "000" to "999" in a numerical sequence.

The exemplary table of Figure 6 includes a thousand words representing objects, which may be represented pictorially. The words are human language words and may additionally be selected for familiarity e.g. common use, simplicity, and distinctiveness from one another. Words which may cause offense may be omitted from the list of words. In response to the lookup query comprising a particular word, a corresponding sequence of three decimal digits from the same entry in the table is returned to the processor 101 by the memory 106. If the input word is not found in the lookup table in the memory 106, an error message may be displayed on the display 103 of the device 10.

At S15, the sequence of digits returned by tohe operation of the processor 101 is provided to an output display 103 of the device, that is, to the touchscreen. At S16, the sequence of digits is displayed to the user by the display 103. A longer sequence of digits may be displayed if a plurality of words have been input by the user and processed by the processor 101. One or more digits input by the user may additionally be displayed as part of the sequence of digits, in this way a number of digits which is not a multiple of three may be recollected by appending remaining digits to one or more groups of three digits provided by the processor 101.

In some embodiments, the output of the device 10 may include an audio output module e.g. a speaker, to provide an audio output instead of, of in addition to, the visual output on the touchscreen.

The operation ends at S17.

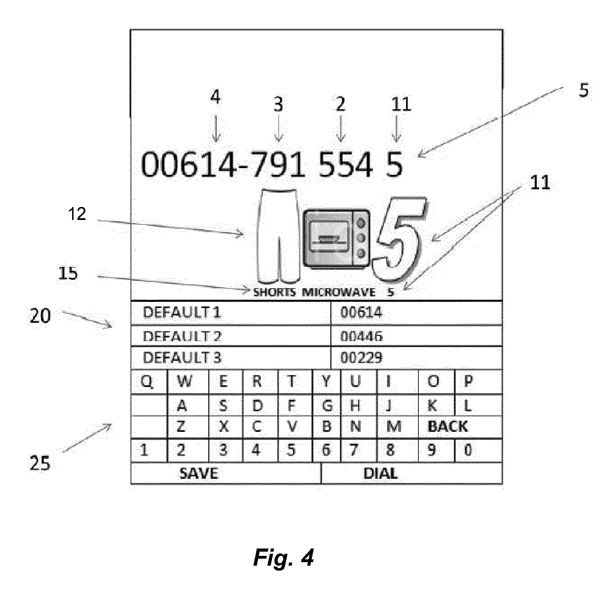

With reference to Figure 4, an exemplary interface is shown for the device 10. The digit set, input 5, may be any number of digits, as described with respect to S2 of the remembering operation. The input 5 may optionally be displayed. The input 5 may be entered and received by the device 10 as described at S2 of Figure 2. This may be accomplished by the use of a keyboard 25 on a computer, mobile phone, or the like. In the illustrated example, a phone number is given for the input 5. If used to translate telephone numbers, for example, short cuts 20 may be provided for common area code prefixes, as in the illustrated example.

According to the embodiment, the input 5 may be separated into a series of three-digit chunks and a remainder, if applicable. The input module 104 of the device 10 receives the sequence of digits input through the user input 105 and is configured to separate the sequence into three-digit chunks and provide the separated chunks to the processor 101.

The input module 104 may check to see if the number of digits in the received sequence is evenly divisible by three, or if division by three results in a remainder. In some embodiments this may be accomplished by modulo division with three as the divisor, followed by a test of the result to determine whether it is greater than zero. If there is no remainder, the input 5 can be separated into consecutive chunks of three digits. If there is a remainder, the input 5 is still separated into chunks of three digits and the remainder may be placed at the end.

In the illustrated example, the input 5 is separated into the chunks "554" as at 2 and 791" as at 3, and the remainder "5" as at 11. The input module 104 may detect or may be instructed that the input 5 is a phone number, and may be configured to omit the prefix "00" from the chunk separation process.

The chunks 2 and 3 may be translated by the operation of the processor 101 into pictorial 12 and/or written 15 representations of the visual objects associated with the input 5. The chunks 2 and 3 may be translated into the associated pictorial representation listed in a lookup table stored in the memory, as shown with reference to Figure 6 for instance. In the illustrated example, the chunk 3 is translated into "shovel" and the chunk 2 into "milk" and the remainder 11 is displayed thereafter, in accordance with the operation of Figure 2. The pictorial representation of the visual objects 12 is merely exemplary. The pictorial representation of the visual objects 12 may include a remainder 11. Alternatively or simultaneously, the device 10 may display a word representation of the visual object 15. The word representation of the visual objects 15 may include a remainder 11.

In some embodiments, a common prefix 4 may instead be entered via the short cut 20 input of the touchscreen. The common prefix 4 may be omitted from the translation process described above. In the illustrated example, the common prefix 4 is an area code of a telephone number. It is notable that the use of the common prefix 4 and the short cuts 20 is optional. In some embodiments, the common prefix 4 may be treated as part of the input 5 and translated with the other digits of the input 5.

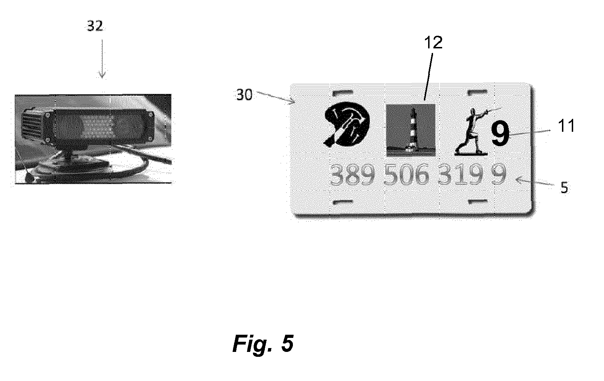

With respect to Figure 5, a schematic representation of a system for remembering a license plate is shown. A license plate scanner 32, for example a camera, is aimed at a license plate 30. The licenses plate 30 may comprise a pictorial representation of the visual objects 12, the series of digits 5, or both. The pictorial representation of the visual objects 12 may include a remainder 11. In some embodiments, the license plate 30 may comprise a word representation of the visual objects. The license plate scanner 32 comprises the device 10 described with respect to Figure 1, and further comprises an image recognition module for recognizing the visual objects 12, the series of digits 5 or both. The image recognition module is configured to provide one or more words relating to a recognised visual object, or one or more digits to the input module 104 of the device 10. The license plate scanner 32 may use this input information in place of the alphanumeric input from the user to perform the operations of Figures 2 and 3.

The license plate scanner 32 may also further comprise a user interface similar to the one described with respect to Figure 4, thus permitting a user to translate between the pictorial representation of visual objects 12 and a series of digits 5.

In another embodiment, a scanner such as a camera, as described with respect to Figure 5, may be used to scan a barcode or QR code. The barcode is a black and white line pattern representing a series of digits. The digits represented by a barcode may be presented to the processor 101 by the scanner and converted into one or more words according to the operation of Figure 2. Alternatively, a pictorial representation of one or more words from the lookup table may be used in place of a barcode or QR code. The pictorial representation can represent the digits represented by a barcode and can also be memorised without scanning or taking a photo. A pictorial code of, for example, three pictures which represent words from the table, could replace a barcode to represent shopping items or encode website addresses and email addresses.

It is important to note that while the systems and methods disclosed herein may be illustrated and discussed in terms of translating from an input of digits to visual objects it is expressly contemplated that the methods and systems may be used in reverse to translate from visual objects to digits, and vice-versa.

It is also important to note that while embodiments of the systems and methods disclosed herein may be illustrated in the context of a specific device, such as a license plate reader, or a mobile phone, these are meant to be exemplary and not limiting. It is expressly contemplated that the methods and systems described herein may be utilized in any context involving the translation of digits into visual objects and vice-versa.

Having shown and described a preferred embodiment of the invention, those skilled in the art will realize that many variations and modifications may be made to affect the described invention and still be within the scope of the claimed invention. Additionally, many of the elements indicated above may be altered or replaced by different elements which will provide the same result and fall within the claimed invention.

For example, the keyboard as shown in Figure 4 is merely exemplary. Any configuration of keyboard is contemplated. Alternatively, other user input means such as a number pad, a scanning device with optical character recognition software, a voice translation device, communication interface module or the like are contemplated. The keyboard may include a series of short cuts 20 so as to eliminate the use of common consecutive digits, for example, area codes for a phone number.

In other embodiments, the alphanumeric input may be provided directly to the input module by another electronic device, for example through a network interface device or other wired or wireless communications port. A separate user device may receive a user input sequence of digits and transmit the digits to a server comprising the input module, processor and memory having the lookup table stored thereon. The server may be remote, such as a cloud device. The processor server performs the lookup operation described with respect to Figure 2 or Figure 3. The server transmits the result of the lookup to the user device for display thereon.

A separate user device may include an input module to accumulate a predetermined number of digits, for example three digits, before transmitting the set of three digits to the server, or the input module may receive a longer sequence of digits and transmit the entire sequence for processing by the server.

The predetermined number of digits may be three decimal digits, which have one thousand distinct permutations. Alternatively, four or more digits may be accumulated and used to generate the database query. A sequence of four decimal digits has ten thousand distinct permutations and a lookup table comprising ten thousand associated words can be provided in the database.

In some embodiments, the input module of the device described with respect to Figure 1 may be operated to provide a sequence of digits to the process in a reverse order i.e. reading the string of digits from right to left. The input module of the embodiment is configured to accumulate the one or more digits input through the user input until a confirmation command is received. When the user input is complete, the input module provides the digits to the processor, beginning with the most recently input digit and proceeding to the first input digit. The processor accumulates the digits and processes the digits in groups of three, as described with respect to Figure 2 at S4. The string of digits is therefore separated into groups of three proceeding from right to left.

In some embodiments, a smaller subset of the one thousand word table may be utilized. For example, only the first four hundred words may be needed. In this case, the system will only compare the chunk against the first four hundred entries in the lookup table, or generally some other subset of four hundred drawn from the one thousand words in the lookup table. The latter technique may be used advantageously in situations requiring privacy, for example those involving cryptographic password usages, wherein random subsets can provide additional unpredictability into a system.

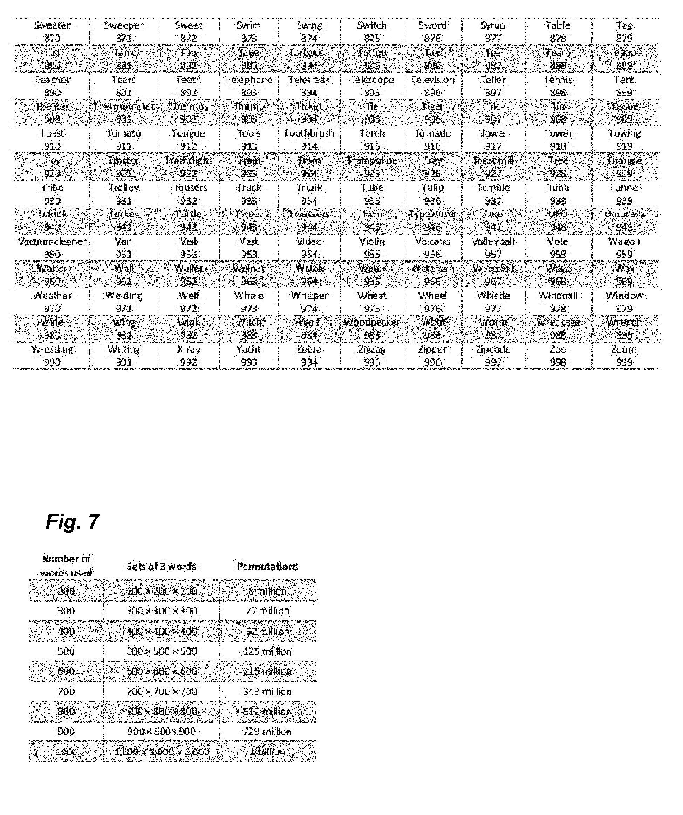

With reference to Figure 7, exemplary subsets of 3-digit chunks are provided with the approximate number of distinct permutations available for a three-word input. In an example situation, a system may utilise only 300 words from the one thousand word table and the provision of the words of pictures will represent 27 million distinct permutations. In a situation where the vehicle count in a particular city is relatively e.g. around 20 million cars, then the system may provide 27 million licence plates with three pictures, using only 300 items from the table.

## Claims

1. A device for assisting a user to remember a numerical string, the device comprising:
a processor;
a memory for storing a lookup table;
an input module for providing one or more decimal digits to the processor; and
an output for receiving an output from the processor;
wherein the processor is configured to accumulate decimal digits until a predetermined number of decimal digits is accumulated, wherein the predetermined number is at least three; to respond to detecting that the predetermined number of decimal digits has been accumulated by performing a lookup to retrieve a human language word associated with the accumulated decimal digits, wherein performing the lookup comprises generating a query based on the accumulated decimal digits and submitting the generated query to the lookup table; and to provide the retrieved word to the output.

2. The device of claim 1, wherein the input module comprises a user input configured to receive one or more digits from a user, and the input module is configured to provide the one or more digits to the processor as they are input.

3. The device of claim 2, wherein the user input is configured further to receive a confirmation input to indicate that the user input is complete, and the input module is configured to accumulate the one or more digits and, on receiving the confirmation input, to provide the accumulated digits to the processor.

4. The device of claim 3, wherein the received digits are provided to the processor in the same order in which they were input.

5. The device of claim 3, wherein the received digits are provided to the processor in the reverse order from which they were input.

6. The device of any one or claims 2 to 5, wherein the input module is configured to perform an operation to determine whether the number of digits input by the user is a multiple of three, to separate the input digits into groups of three and a remainder, to provide the groups of three digits to the processor and to provide the remained to the output.

7. The device of any preceding claim, wherein the input module comprises a camera for scanning one or more digits and a text recognition module for recognising the one or more input digits.

8. The device of any preceding claim, wherein the lookup table comprises one thousand entries, each entry comprising a distinct sequence of decimal digits and a human language word associated with said sequence of digits.

9. The device of any preceding claim, wherein the output comprises a display for displaying the retrieved word to a user, and the output display is configured to display a pictorial representation of the retrieved word instead of, or in addition to, the retrieved word.

10. A device for assisting a user to remember a numerical string, the device comprising:
a processor;
a memory for storing a lookup table;
an input module for providing one or more human language words to the processor; and
an output for receiving an output from the processor;
wherein the processor is configured to perform a lookup to retrieve a number of decimal digits associated with each of the one or more words, wherein the number of decimal digits associated with each of the one or more words is at least three, and performing the lookup comprises generating a query based on the one or more words and submitting the generated query to the lookup table; and to provide the retrieved decimal digits to the output.

11. The device of claim 10, wherein the input module comprises a user input configured to receive the one or more words from a user.

12. The device of claim 11, wherein the user input is configured further to receive a confirmation input to indicate that the user input is complete.

13. The device of any one of claims 10 to 12, wherein the input module comprises a camera for scanning one or more words or a pictorial representation of one or more words, and an image recognition module for recognising the one or more scanned words or determining the one or more words represented by the one or more pictorial representations scanned by the camera.

14. The device of any one of claim 10 to 13, wherein the lookup table comprises one thousand entries, each entry comprising a distinct sequence of decimal digits and a human language word associated with said sequence of digits.

15. The device of any one of claims 10 to 14, wherein the output comprises a display for displaying the retrieved decimal digits to a user.
